# EUROPEAN PATENT SPECIFICATION

(11) **EP 2 678 499 B1**
(45) Date of publication and mention of the grant of the patent: **22.05.2019**
(21) Application number: 12706518.3
(22) Date of filing: 20.02.2012
(51) Int. Cl.: E05B 65/46, E05B 65/462, B65G 1/04

(54) **CARRYING DEVICE**
TRAGEVORRICHTUNG
DISPOSITIF DE SUPPORT

(30) Priority: 22.02.2011 DE 102011004519
(43) Date of publication of application: 01.01.2014
(73) Proprietor: Gardner Denver Schopfheim GmbH, 79650 Schopfheim (DE)
(72) Inventor: RÜDINGER, Bernd, 79541 Lörrach (DE)
(74) Representative: Rau, Schneck & Hübner Patentanwälte Rechtsanwälte PartGmbB
(86) International application number: PCT/EP2012/052861
(87) International publication number: WO 2012/113751

(56) References cited:
- CH-A5- 696 407
- GB-A- 1 379 726
- GB-A- 1 511 928

## Description

The invention relates to a carrying device for carrying items, in particular for carrying pumps, according to the preamble of claim 1.

Drawer systems, which are used to carry items, are known from the prior art. These drawer systems can easily tip over when their drawers are all simultaneously in a drawn out draw-out position and carry heavy items. A tipping over of a drawer system of this type can lead to damage to people, damage to the drawer system, the items accommodated and/or to the surroundings.

GB 1 379 726 A which is the closest prior art discloses a cabinet with two or more drawers. The cabinet comprises a substantially vertical, longitudinally displaceable sliding bar which is provided adjacent each drawer with a blocking means. The blocking means is adapted to cooperate with the pertaining drawer or a member connected thereto, so that in one position of the sliding bar, it will block the drawer and in another position of the sliding bar, it will release the drawer to allow it to be pulled out.

The invention has as an object providing a carrying device, which has extremely high stability and is extremely functionally reliable during use. Moreover, the carrying device should be particularly economical to produce.

An embodiment of the invention which achieves the above object is stated in claim 1.

The above described embodiment provides that the carrying device includes a locking-release mechanism, which prevents all the sliding carriers from being drawn out simultaneously. The locking-release mechanism, in its locking position, locks at least one of the sliding carriers in its insertion position. In its release-position, it allows at least one sliding carrier to be drawn out, but not all the sliding carriers to be drawn out simultaneously.

n sliding carriers are provided. n is a natural, i.e. a positive, whole number here. It is advantageous if n release recesses are also provided.

The sliding carriers are displaceable between an inserted insertion position and a drawn out draw-out position. It is advantageous if intermediate positions can also be adopted by the sliding carriers.

At least one locking attachment piece is provided on each sliding carrier. It is advantageous if the locking attachment piece is provided at the back or at the rear of the respective sliding carrier.

The draw-out display is preferably a mechanical draw-out display. It indicates the currently released or withdrawable sliding carrier(s). This sliding carrier is not then locked. The draw-out display can preferably also indicate that no sliding carrier is currently released.

To guide the sliding carrier, guides are preferably provided on the frame and/or on the sliding carriers. The guides preferably extend in an oblique manner, preferably perpendicularly, with respect to the vertical direction.

The sliding carriers preferably have an identical spacing from one another in the vertical direction. The release recesses preferably have an identical spacing from one another. Different spacings between the sliding carriers or the release recesses are possible as an alternative.

The at least one locking-release body is preferably elongate. It can have a round or non-round cross-section. The locking-release body preferably has n release positions, which are offset from one another in the vertical direction and are predetermined. It is advantageous if the locking-release body has n+1 locking positions, which are offset from one another in the vertical direction and are predetermined.

The opening height of a release recess is advantageously slightly larger than the thickness of a locking attachment piece.

In particular, the carrying device is provided to carry medical pumps, which are used in medical technology. During use of the carrying device, each sliding carrier carries at least one item, preferably at least one pump.

Preferably, the locking-release mechanism has at least one displacement handle, which is provided on the locking-release body to displace the locking-release body along the vertical direction relative to the sliding carriers. The displacement handle allows reliable and easy displacement of the locking-release body. It can be configured in one piece with the locking-release body. The displacement handle can have any anti-slip means, such as elevations, indentations and/or rubber regions.

Preferably, the information element has at least n, preferably n+1, locking pin openings arranged above one another. The locking pin openings preferably have the same spacing with respect to one another. These are preferably identically configured. The locking pin openings may be round, polygonal or elongate. They may have a closed periphery. However, they may also be open at the side.

Preferably, the information element has at least n, preferably n+1, information signs arranged above one another to display the released sliding carrier(s). The information signs preferably have an identical spacing from one another. They are preferably information digits. However, the information signs can also be, or comprise, letters, symbols, combinations or the like. Conversely, the information signs also therefore indicate which sliding carrier(s) is/are currently locked. An information sign is also preferably provided, which indicates that no sliding carrier is released or that all the sliding carriers are locked.

Preferably, the counter-element has a further locking pin opening. The locking pin opening may be round, polygonal or elongate. It may have a closed periphery. However, it may also be open at the side.

Preferably, the locking pin, in its locking position, passes through the locking pin opening of the counter-element and one of the locking pin openings of the information element, in the manner of a bolt. The locking pin can preferably be locally fixed in the respective locking pin openings. This can be carried out for example by at least one securing means, which is connected to the locking pin and preferably engages behind the draw-out display, The securing means can be configured as a latching element which is provided on the locking pin. However, it can also be formed by a nut that can be screwed onto the locking pin or a retaining means passing obliquely through the locking pin.

Preferably. the counter-element comprises a release point to point to an information sign. The release pointer allows a particularly precise display of the released or withdrawable sliding carrier(s).

Preferably, the information element is provided on the locking-release body or on the frame, while the counter-element is then provided on the other part. According to the configuration, the information element may be provided on the locking-release body and the counter-element may be provided on the frame. Alternatively, the information element may, however, also be provided on the frame and the counter-element may be provided on the locking-release body. The part provided on the frame is then virtually stationary, while the other part, in its release position, is movable relative thereto in the vertical direction.

A preferred embodiment of the invention will be described by way of example below with reference to the accompanying drawings, in which:
- Fig. 1: shows a side view of a carrying device according to the invention, its sliding carriers all being in the insertion position and locked,
- Fig. 2: shows the detail II characterised in Fig. 1,
- Fig. 3: shows a perspective view of the carrying device shown in Fig. 1,
- Fig. 4: shows the detail IV characterised in Fig. 3,
- Fig. 5: shows a side view of the carrying device shown in Fig. 1, its uppermost sliding carrier being released and the other sliding carriers being locked,
- Fig. 6: substantially shows a perspective view of the carrying device shown in Fig. 5,
- Fig. 7: shows the detail VII characterised in Fig. 6, and
- Fig. 8: shows the detail VIII characterised in Fig. 8.

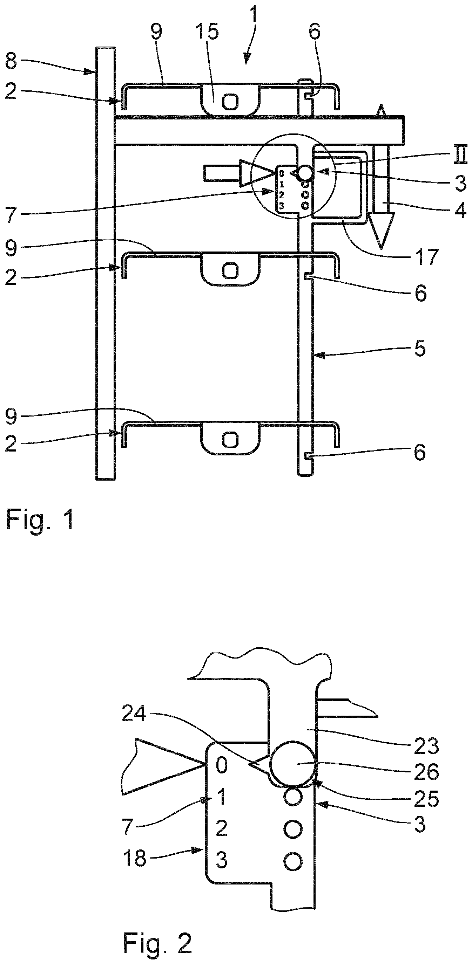

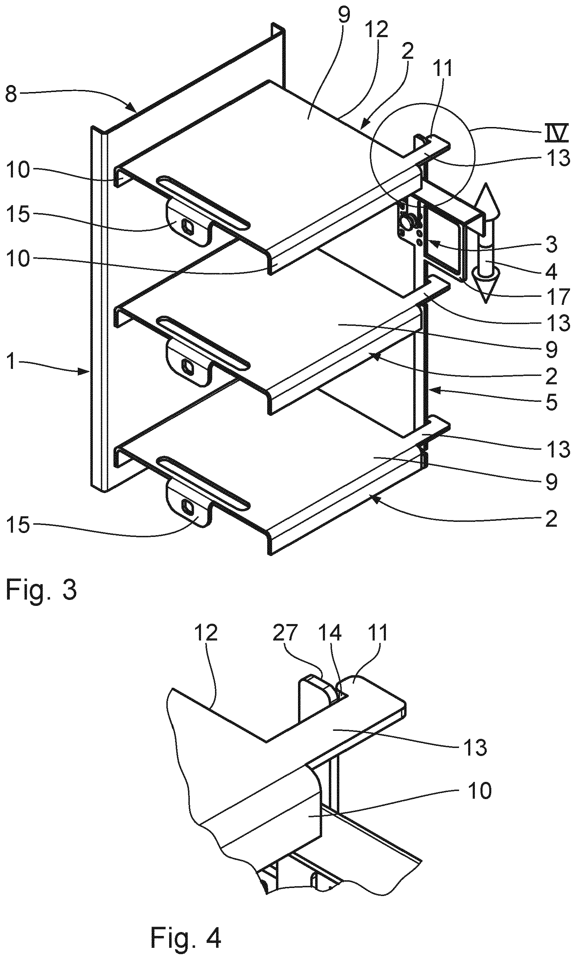

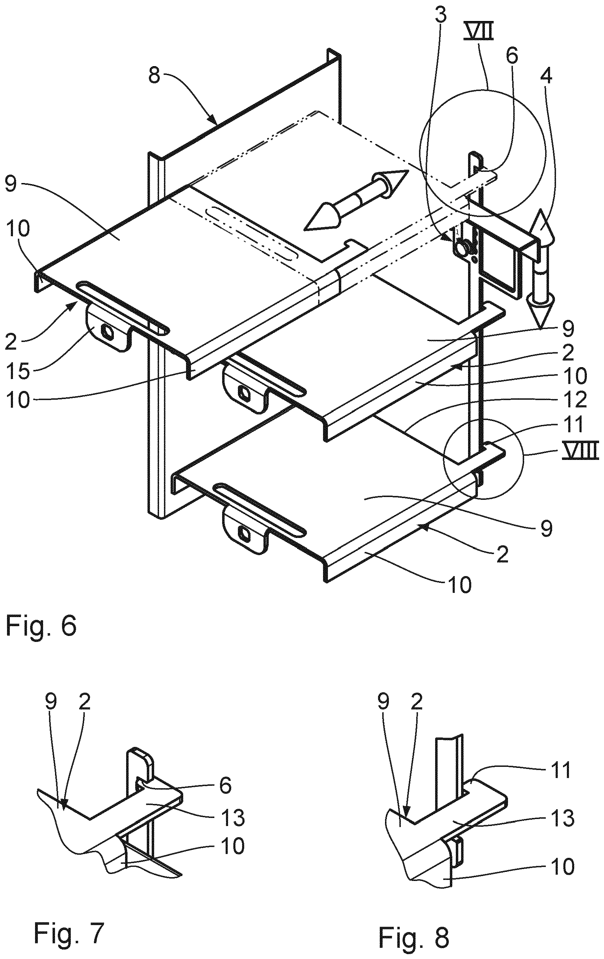

A carrying device is shown substantially in its entirety in Fig. 1, 3, 5 and 6. The carrying device comprises a frame 1, a plurality of sliding carriers 2 displaceably guided in the frame 1 and a locking-release mechanism 3, which can be actuated to release and lock the sliding carriers 2. The sliding carriers 2 are arranged above one another. They are movable in the frame 1 between an inserted insertion position and a drawn out draw-out position. The insertion position of the sliding carriers 2 is shown in Fig. 1, 3 and 5. It is also shown by dashed lines in Fig. 6. In Fig. 6, the uppermost sliding carrier 2 is in its draw-out position. The carrying device forms a drawer system.

The sliding carriers 2 are configured to carry items (not shown), in particular to carry pumps. The locking-release mechanism 3 comprises a locking-release body 5, which extends vertically in a vertical direction 4 and can be displaced along the latter in its release position. In its locking position, the locking-release body 5 is locally fixed relative to the frame 1. A plurality of release recesses 6 are formed in the locking-release body 5. In a release position of the locking-release body 5, at least one sliding carrier 2 can be drawn out via the associated release recess 6, it not being possible to simultaneously draw out all the sliding carriers 2. Precisely one sliding carrier 2 can then preferably be drawn out. The other sliding carriers 2, on the other hand, are locked in the insertion position by the locking-release body 5.

A draw-out display 7 indicates which sliding carrier(s) 2 is/are currently released or withdrawable.

In total n sliding carriers 2 and n release recesses 6 are provided. In a locking position of the locking-release mechanism 3, at least one sliding carrier 2 is locked in its insertion position. All or all the sliding carriers 2 except for one sliding carrier 2 are preferably then locked. In a release position of the locking-release body 5, at least one, but at most n-1, sliding carriers 2 can be drawn out simultaneously. Preferably, precisely one sliding carrier 2 can be drawn out in a release position of the locking-release body 5. For n, there preferably applies: 2 ≤ n ≤ 10, preferably 3 ≤ n ≤ 6. According to this embodiment, three sliding carriers 2 and three release recesses 6 are present. n therefore equals three here.

The frame 1 comprises two frame elements 8, only one frame element 8 being shown in the drawing. The frame elements 8 are preferably identical. According to the embodiment shown, the frame elements 8 are formed by frame plates, which extend in the vertical direction 4 and parallel to one another.

Sliding carrier guides (not shown) are provided on the frame elements 8 on the inside and are used for the guided displacement of the sliding carriers 2 in an oblique manner, preferably perpendicularly, with respect to the vertical direction 4. The frame 1 can also be designed differently. It may, for example, comprise a plurality of individual sliding carrier guides, which are rigidly connected to one another by connecting profiles. The sliding carrier guides may, however, also be directly fitted on a building wall. The building wall then forms the frame 1.

The sliding carriers 2 are substantially formed in a plate-like manner according to the embodiment described. The sliding carriers 2 are preferably identical. Each sliding carrier 2 has a carrier plate 9, which is rectangular. The carrier plates 9 lie in planes running parallel to one another and preferably perpendicular to the vertical direction 4. The carrier plates 9 are configured to carry the items. The items may be placed on the carrier plates 9. However, they can also be hung thereon.

Provided on each carrier plate 9 are two mutually opposing guide webs 10, which run substantially perpendicular to the carrier plates 9 and are used to guide the sliding carriers 2 in the frame 1. The guide webs 10 of a carrier plate 9 extend parallel to one another. They face the frame elements 8.

A back or rear locking attachment piece 11 is provided on each sliding carrier 2. A spacing web 13, on which the locking attachment piece 11 is arranged, projects rearward from the rear side 12 of each carrier plate 9. The locking attachment pieces 11 project laterally from the respective spacing web 13, forming a locking flank 14. The locking flanks 14 face the respective rear side 12 and run parallel thereto. The spacing webs 13 and the locking attachment pieces 11 lie with the respective carrier plate 9 in a common plane. They are preferably formed in one piece with the respective carrier plate 9. The locking attachment pieces 11 are rigidly connected to the respective sliding carrier 2. Consequently, the locking attachment pieces 11 and the respective sliding carrier 2 are unmovable to each other. The sliding carriers 2 may, however, also be differently configured.

A fastener element receiver 15 for receiving a fastener element is provided on each carrier plate 9 opposite each rear side 12. The fastener elements 11 are used to fix the sliding carriers 2.

As already mentioned, the locking-release mechanism 3 comprises the locking-release body 5. The locking-release body 5 is elongate and has a centre axis 16, which extends along the vertical direction 4. It is strip-like here. The locking-release body 5 extends in the vertical direction 4 beyond the sliding carriers 2, in other words, it protrudes relative to the uppermost sliding carrier 2 and the lowermost sliding carrier 2.

The release recesses 6 formed in the locking-release body 5 are arranged spaced apart from one another in the vertical direction 4. A release recess 6 is associated with each sliding carrier 2 here. The release recesses 6 are slot-like and pass through the locking-release body 5 perpendicular to the vertical direction 4 from front to back. The spacing of the release recesses 6 from one another is preferably identical. It is preferably greater, preferably slightly greater, than the spacing of the sliding carriers 2 from one another.

Provided on the locking-release body 5 is a displacement handle 17, which is bracket-like. The displacement handle 17 may, however, also be configured differently.

Also provided on the locking-release body 5 is an information element 18, which is preferably located in the region of the displacement handle 17. The displacement handle 17 and the information element 18 are non-movable relative to the locking-release body 5. The information element 18 is advantageously plate-like. The information element 18 has an information field 19 on the front, on which information signs 20 are provided. The information signs 20, which are information digits here, are arranged above one another here. The number of information signs 20 is greater by one than the number of sliding carriers 2 or release recesses 6. Four information signs 20 are thus present here in total.

Formed in the information field 19 are also locking pin openings 21, a locking pin opening 21 being associated with each information sign 20. The locking pin openings 21 are thus also arranged above one another. They are located in the corresponding vertical position of the associated information sign 20. The locking pin openings 21 are preferably circular in cross-section.

A transverse carrier 22 is provided on the frame 1. The transverse carrier 22 projects on the inside here from the frame element 8 and runs perpendicular to the vertical direction 4. It is rigidly connected to the frame element 8 and extends from the frame element 8 at least to the locking-release body 5. A counter-element 23, in which a further locking pin opening (not shown) is provided, projects in the vertical direction 4, preferably downward, in the region of the locking-release body 5. The locking pin opening of the counter element 23 substantially corresponds with respect to shape and size to the locking pin openings 21 of the information element 18. The counter-element 23 and the information element 18 lie in planes that are parallel to one another. Provided on the counter-element 23 is a release pointer 24, which projects laterally from the counter-element 23 perpendicular to the vertical direction 4 and points in the direction of the information signs 20. The counter-element 23 is therefore non-movably attached to the frame 1. It is virtually stationary.

The information element 18 and the counter-element 23 can be fixed to one another by means of a locking pin 25 along the vertical direction 4. The locking pin 25 has a locking pin head 26 and a locking pin core (not shown) adjoining the latter. The locking pin core is cross sectionally slightly smaller than the locking pin openings 21 of the information element 18 and the counter-element 23.

The locking-release mechanism 3 is substantially formed by the locking-release body 5, the locking attachment pieces 11, the locking pin 25, the displacement handle 17 and the draw-out display 7, which is in turn formed by the frame-side counter-element 23 and the information element 18.

The carrying device will be described in use below. This is based on Fig. 1 to 4.

As can be seen from Fig. 1, 2 and 3, the release pointer 24 points to the uppermost information sign 20, which is a "0" here. This information sign 20 indicates that all the sliding carriers 2 are locked in their insertion position and cannot thus be drawn out. The locking attachment pieces 11 engage behind the locking-release body 5 here. They are all located above the associated release recess 6. The locking flanks 14 are arranged adjacent to the rear side 27 of the locking-release body 5. At the rear, they may rest on the rear side 27. The rear side 27 and the locking flanks 14 together prevent the sliding carriers 2 from being able to be moved from their insertion position into their draw-out position. In this case, the locking pin 25 with its locking pin core passes, in the manner of a bolt, through the locking pin opening formed in the counter-element 23 and the uppermost locking pin opening 21, which is formed in the information element 18 and is associated with the uppermost information sign 20, so the information element 18 and the counter-element 24 are non-movable relative to one another in the vertical direction 4. On the front side, the locking pin head 26 rests on the counter-element 23.

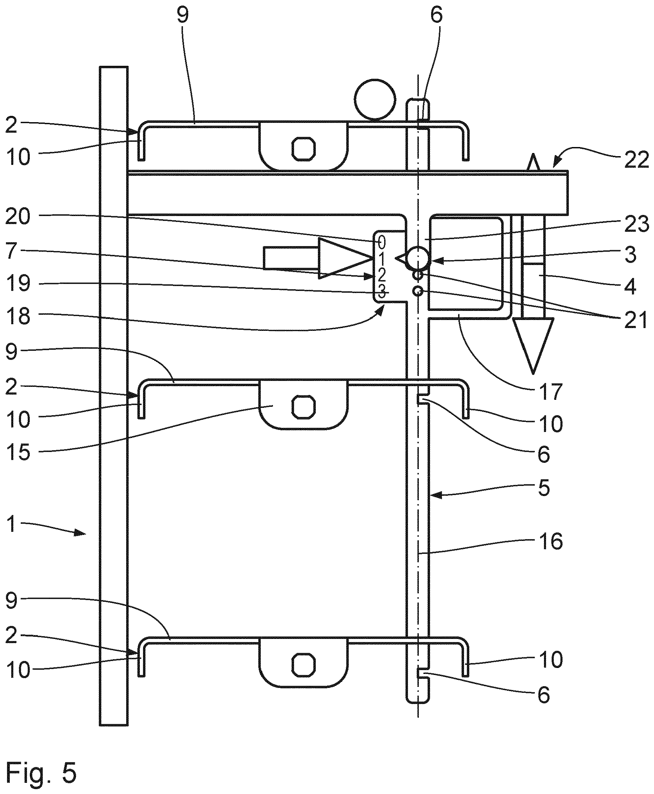

In order to release a sliding carrier 2, the locking pin 25 is to be drawn out of the locking pin opening of the counter-element 23 and the uppermost locking pin opening 21 of the information element 18. The locking-release body 5 can be displaced along the vertical direction 4 relative to the counter-element 23, when the locking pin 25 is removed. The displacement handle 17 is preferably to be used for this. In order to release the uppermost sliding carrier 2, the locking-release body 5 is to be displaced upwardly in such a way that the release pointer 24 points to the second information sign 20 from the top, which is a "1" here. The locking pin 25 is then to be guided through the locking pin opening of the counter-element 23 and the locking pin opening 21 of the information element 18, which is associated with this information sign 20 and is the second locking pin opening 21 from the top. The uppermost release recess 6 is then located in front of the locking attachment piece 11 of the uppermost sliding carrier 2 at the level thereof, so that this locking attachment piece 11 can be drawn out through the uppermost release recess 6 together with the corresponding sliding carrier 2. This locking attachment piece 11, when the uppermost sliding carrier 2 is drawn out, then passes through the uppermost release recess 6 perpendicular to the vertical direction 4 from the back to the front. The remaining sliding carriers 2 continue to be locked in their insertion position by the locking-release body 5, i.e. the remaining release recesses 6 are arranged vertically offset with respect to the associated locking attachment pieces 11. This is shown in Fig. 5 to 8, in which Fig. 7 shows the locking attachment piece 11 of the uppermost sliding carrier 2 and Fig. 8 shows the locking attachment piece 11 of the lowermost sliding carrier 2. The release recesses 6 are accordingly dimensioned and arranged for this.

If the release pointer 24 points to the third information sign 20 from the top, a "2" here, the second sliding carrier 2 from the top, the central sliding carrier 2 here, is released. The locking-release body 5 has been moved further upward for this purpose. The other sliding carriers 2, on the other hand, are locked in their insertion position.

If the release pointer 24 points to the lowermost information sign 20, a "3" here, the lowermost sliding carrier 2 is released, while the remaining sliding carriers 2 are locked in their insertion position. The locking-release body 5 has been displaced still further upward for this purpose.

The locking-release body 5 can then be displaced downward again in an analogous manner in the vertical direction 4.

For convenient and easy displacement of the sliding carriers 2, at least one handle is preferably provided on each sliding carrier 2. The sliding carriers 2 can be gripped well by the handles.

## Claims

1. Carrying device for carrying the items, in particular for carrying pumps, comprising
a) a frame (1)
b) n sliding carriers (2) for carrying the items, wherein
n is > 1 and the sliding carriers (2)
i. are displaceably guided in the frame (1) between an inserted insertion position and a drawn out draw-out position, and
ii. are arranged above one another in the frame (1), and
c) a locking-release mechanism (3) to release and lock the sliding carriers (2), wherein the locking-release mechanism (3)
i. comprises at least one locking-release body (5),
- which, in a release position, can be displaced along a vertical direction (4) relative to the sliding carriers (2), and
- has at least one, preferably n, release recess(es) (6), and
ii. on each sliding carrier (2), has at least one locking attachment piece (11), which
- in a locking position of the at least one locking-release body (5), by interaction with the at least one locking-release body (5), locks the respective sliding carrier (2) in its insertion position, and
- in a release position of the at least one locking-release body (5), can be guided through at least one associated release recess (6) to draw out the respective sliding carrier (2),
- wherein the locking-release mechanism (3) is configured in such a way that in a release position of the at least one locking-release body (5), less than n sliding carriers (2) can be drawn out simultaneously, wherein the locking-release mechanism (3) is preferably configured in such a way that in a release position of the at least one locking-release body (5), only one sliding carrier (2) can be drawn out,
**characterised in that**
d) the locking-release mechanism (3) has at least one draw-out display (7) for displaying the released sliding carrier(s) (2),
e) the draw-out display (7) has an information element (18) and a counter-element (23) associated with the information element (18), and
f) the information element (18) and the counter-element (23) are movable in their release position relative to one another in the vertical direction (4) and are non-movable in their locking position relative to one another in the vertical direction (4).

2. Carrying device according to claim 1, **characterised in that** the locking-release mechanism (3) has at least one displacement handle (17), which is provided on the locking-release body (5) to displace the locking-release body (5) along the vertical direction (4) relative to the sliding carriers (2).

3. Carrying device according to claim 1 or 2, **characterised in that** the information element (18) has at least n, preferably n+1, locking pin openings (21) arranged above one another.

4. Carrying device according to any one of claims 1 to 3, **characterised in that** the information element (18) has at least n, preferably n+1, information signs (20) arranged above one another to display the released sliding carrier(s) (2).

5. Carrying device according to claim 3 and 4, **characterised in that** an information sign (20) is associated with each locking pin opening (21), sliding carriers (2) being in turn associated with the information signs (20), wherein preferably the locking pin openings (21) and the associated information signs (20) are in each case arranged at a common level.

6. Carrying device according to any one of claims 1 to 5, **characterised in that** the counter-element (23) has a further locking pin opening.

7. Carrying device according to any one of claims 1 to 6, **characterised in that** the locking-release mechanism (3) has at least one locking pin (25) to prevent a relative movement between the information element (18) and the counter-element (23) in the vertical direction (4) in the locking position thereof.

8. Carrying device according to claim 6 and 7, **characterised in that** the locking pin (25), in its locking position, passes through the locking pin opening of the counter-element (23) and one of the locking pin openings (21) of the information element (18), in the manner of a bolt.

9. Carrying device according to any one of claims 1 to 8, **characterised in that** the counter-element (23) comprises a release pointer (24) to point to an information sign (20).

10. Carrying device according to any one of claims 1 to 9, **characterised in that** the information element (18) is provided on the locking-release body (5) or on the frame (1), while the counter-element (23) is then provided on the other part (5, 1).

11. Carrying device according to any one of claims 1 to 10, **characterised in that** the information element (18) is provided on the locking-release body (5) and the counter-element (23) is provided on the frame (1).

12. Carrying device according to any one of claims 1 to 11, **characterised in that** the at least one locking attachment piece (11) is rigidly connected to the respective sliding carrier (2).

## Patentansprüche

1. Trag-Vorrichtung zum Tragen von Gegenständen, insbesondere zum Tragen von Pumpen, umfassend
a) einen Rahmen (1)
b) n Schub-Träger (2) zum Tragen der Gegenstände, wobei
n > 1 ist und die Schub-Träger (2)
i. in dem Rahmen (1) zwischen einer eingeschobenen Einschieb-Stellung und einer ausgezogenen Auszugs-Stellung verschiebbar geführt sind, und
ii. in dem Rahmen (1) übereinander angeordnet sind, und
c) eine Arretier-Freigabe-Einrichtung (3) zum Freigeben und Arretieren der Schub-Träger (2), wobei die Arretier-Freigabe-Einrichtung (3)
i. mindestens einen Arretier-Freigabe-Körper (5) umfasst,
- der in einer Freigabe-Stellung entlang einer Vertikal-Richtung (4) relativ zu den Schub-Trägern (2) versetzbar ist, und
- mindestens eine, vorzugsweise n, Freigabe-Aussparung/en (6) aufweist, und
ii. an jedem Schub-Träger (2) mindestens einen Arretier-Ansatz (11) hat, der
- in einer Arretier-Stellung des mindestens einen Arretier-Freigabe-Körpers (5) durch Wechselwirken mit dem mindestens einen Arretier-Freigabe-Körper (5) den jeweiligen Schub-Träger (2) in seiner Einschieb-Stellung arretiert, und
- in einer Freigabe-Stellung des mindestens einen Arretier-Freigabe-Körpers (5) durch mindestens eine zugeordnete Freigabe-Aussparung (6) zum Ausziehen des jeweiligen Schub-Trägers (2) führbar ist,
- wobei die Arretier-Freigabe-Einrichtung (3) derart ausgebildet ist, dass in einer Freigabe-Stellung des mindestens einen Arretier-Freigabe-Körpers (5) weniger als n Schub-Träger (2) gleichzeitig ausziehbar sind, wobei vorzugsweise die Arretier-Freigabe-Einrichtung (3) derart ausgebildet ist, dass in einer Freigabe-Stellung des mindestens einen Arretier-Freigabe-Körpers (5) nur ein Schub-Träger (2) ausziehbar ist,
**dadurch gekennzeichnet, dass**
d) die Arretier-Freigabe-Einrichtung (3) mindestens eine Auszugs-Anzeige (7) zum Anzeigen des/der freigegebenen Schub-Träger/s (2) aufweist,
e) die Auszugs-Anzeige (7) ein Informations-Element (18) und ein dem Informations-Element (18) zugeordnetes Gegen-Element (23) aufweist, und
f) das Informations-Element (18) und das Gegen-Element (23) in ihrer Freigabe-Stellung relativ zueinander in der Vertikal-Richtung (4) beweglich und in ihrer Arretier-Stellung relativ zueinander in der Vertikal-Richtung (4) unbeweglich sind.

2. Trag-Vorrichtung nach Anspruch 1, **dadurch gekennzeichnet, dass** die Arretier-Freigabe-Einrichtung (3) mindestens einen an dem Arretier-Freigabe-Körper (5) vorgesehenen Versetzungs-Griff (17) zum Versetzen des Arretier-Freigabe-Körpers (5) entlang der Vertikal-Richtung (4) gegenüber den Schub-Trägern (2) aufweist.

3. Trag-Vorrichtung nach Anspruch 1 oder 2, **dadurch gekennzeichnet, dass** das Informations-Element (18) mindestens n, vorzugsweise n + 1, übereinander angeordnete Arretier-Stift-Öffnungen (21) hat.

4. Trag-Vorrichtung nach einem der Ansprüche 1 bis 3, **dadurch gekennzeichnet, dass** das Informations-Element (18) mindestens n, vorzugsweise n + 1, übereinander angeordnete Informations-Zeichen (20) zur Anzeige des/der freigegebenen Schub-Träger/s (2) aufweist.

5. Trag-Vorrichtung nach Anspruch 3 und 4, **dadurch gekennzeichnet, dass** jeder Arretier-Stift-Öffnung (21) ein Informations-Zeichen (20) zugeordnet ist, wobei den Informations-Zeichen (20) wiederum Schub-Träger (2) zugeordnet sind, wobei vorzugsweise die Arretier-Stift-Öffnungen (21) und die zugeordneten Informations-Zeichen (20) jeweils auf einer gemeinsamen Höhe angeordnet sind.

6. Trag-Vorrichtung nach einem der Ansprüche 1 bis 5, **dadurch gekennzeichnet, dass** das Gegen-Element (23) eine weitere Arretier-Stift-Öffnung hat.

7. Trag-Vorrichtung nach einem der Ansprüche 1 bis 6, **dadurch gekennzeichnet, dass** die Arretier-Freigabe-Einrichtung (3) mindestens einen Arretier-Stift (25) zum Verhindern einer RelativBewegung zwischen dem Informations-Element (18) und dem Gegen-Element (23) in der Vertikal-Richtung (4) in deren Arretier-Stellung aufweist.

8. Trag-Vorrichtung nach Anspruch 6 und 7, **dadurch gekennzeichnet, dass** der Arretier-Stift (25) in seiner Arretier-Stellung die Arretier-Stift-Öffnung des Gegen-Elements (23) und eine der Arretier-Stift-Öffnungen (21) des Informations-Elements (18) riegelartig durchsetzt.

9. Trag-Vorrichtung nach einem der Ansprüche 1 bis 8, **dadurch gekennzeichnet, dass** das Gegen-Element (23) einen Freigabe-Zeiger (24) zum Zeigen auf ein Informations-Zeichen (20) umfasst.

10. Trag-Vorrichtung nach einem der Ansprüche 1 bis 9, **dadurch gekennzeichnet, dass** das Informations-Element (18) an dem Arretier-Freigabe-Körper (5) oder an dem Rahmen (1) vorgesehen ist, während das Gegen-Element (23) dann an dem anderen Teil (5, 1) vorgesehen ist.

11. Trag-Vorrichtung nach einem der Ansprüche 1 bis 10, **dadurch gekennzeichnet, dass** das Informations-Element (18) an dem Arretier-Freigabe-Körper (5) und das Gegen-Element (23) an dem Rahmen (1) vorgesehen ist.

12. Trag-Vorrichtung nach einem der Ansprüche 1 bis 11, **dadurch gekennzeichnet, dass** der mindestens eine Arretier-Ansatz (11) starr mit dem jeweiligen Schub-Träger (2) verbunden ist.

## Revendications

1. Dispositif de support pour porter des objets, en particulier pour porter des pompes, comprenant
a) un cadre (1)
b) n supports glissants (2) pour porter les objets,
n étant > 1 et les supports glissants (2)
i. étant guidés de manière déplaçable dans le cadre (1) entre une position d'insertion insérée et une position d'extraction retirée, et
ii. étant disposés l'un au-dessus de l'autre dans le cadre (1), et
c) un dispositif verrouillage-déblocage (3) pour débloquer et verrouiller les supports glissants (2), le dispositif verrouillage-déblocage (3)
i. comprenant au moins un corps verrouillage-déblocage (5),
- celui-ci étant déplaçable dans une position de déblocage le long d'une direction verticale (4) par rapport aux supports glissants (2), et
- présentant au moins un, de préférence n, renfoncement/s de déblocage (6), et
ii. ayant au moins un élément de verrouillage (11) sur chaque support glissant (2), qui
- dans une position d'arrêt de l'au moins corps verrouillage-déblocage (5), par interaction avec l'au moins un corps verrouillage-déblocage (5), bloque le support glissant (2) respectif dans sa position d'insertion, et
- dans une position de déblocage de l'au moins un corps verrouillage-déblocage (5), peut être guidé par au moins un renfoncement de déblocage (6) attribué pour retirer le support glissant (2) respectif,
- le dispositif verrouillage-déblocage (3) étant formé de sorte que dans une position de déblocage de l'au moins un corps verrouillage-déblocage (5) moins que n supports glissants (2) sont retirables en même temps, le dispositif verrouillage-déblocage (3) étant formé de préférence de sorte que, dans une position de déblocage de l'au moins un corps verrouillage-déblocage (5), un support glissant (2) seulement est retirable,
**caractérisé en ce que**
d) le dispositif verrouillage-déblocage (3) présente au moins un afficheur d'extraction (7) pour afficher le/s support/s glissant/s (2) débloqué/s,
e) l'afficheur d'extraction (7) présente un élément d'information (18) et un contre-élément (23) attribué à l'élément d'information (18), et
f) l'élément d'information (18) et le contre-élément (23) dans leur position de déblocage sont mobiles l'un par rapport à l'autre dans la direction verticale (4) et dans leur position de verrouillage sont immobiles l'un par rapport à l'autre dans la direction verticale (4).

2. Dispositif de support selon la revendication 1, **caractérisé en ce que** le dispositif verrouillage-déblocage (3) présente au moins une poignée de déplacement (17) prévue sur le corps verrouillage-déblocage (5) pour déplacer le corps verrouillage-déblocage (5) le long de la direction verticale (4) par rapport aux supports glissants (2).

3. Dispositif de support selon la revendication 1 ou 2, **caractérisé en ce que** l'élément d'information (18) a au moins n, de préférence n + 1, ouvertures pour goupille d'arrêt (21) disposées l'une au-dessus de l'autre.

4. Dispositif de support selon l'une quelconque des revendications 1 à 3, **caractérisé en ce que** l'élément d'information (18) présente au moins n, de préférence n + 1, signes d'information (20) disposés l'un au-dessus de l'autre, pour afficher le/s support/s glissant/s (2) débloqué/s.

5. Dispositif de support selon la revendication 3 et 4, **caractérisé en ce qu'**un signe d'information (20) est attribué à chaque ouverture pour goupille d'arrêt (21), des supports glissants (2) étant attribués à leur tour aux signes d'information (20), les ouvertures pour goupille d'arrêt (21) et les signes d'information (20) attribués, chacun, étant de préférence disposés à une hauteur commune.

6. Dispositif de support selon l'une quelconque des revendications 1 à 5, **caractérisé en ce que** le contre-élément (23) a une ouverture pour goupille d'arrêt supplémentaire.

7. Dispositif de support selon l'une quelconque des revendications 1 à 6, **caractérisé en ce que** le dispositif verrouillage-déblocage (3) présente au moins une goupille d'arrêt (25) pour éviter un mouvement relatif entre l'élément d'information (18) et le contre-élément (23) dans la direction verticale (4) dans leur position de verrouillage.

8. Dispositif de support selon la revendication 6 et 7, **caractérisé en ce que** la goupille d'arrêt (25) dans sa position de verrouillage traverse l'ouverture de goupille d'arrêt du contre-élément (23) et une des ouvertures pour goupille d'arrêt (21) de l'élément d'information (18) en forme de verrou.

9. Dispositif de support selon l'une quelconque des revendications 1 à 8, **caractérisé en ce que** le contre-élément (23) comprend un pointeur de déblocage (24) pour pointer sur un signe d'information (20).

10. Dispositif de support selon l'une quelconque des revendications 1 à 9, **caractérisé en ce que** l'élément d'information (18) est prévue sur le corps verrouillage-déblocage (5) ou sur le cadre (1), alors que le contre-élément (23) est dans ce cas prévu sur l'autre partie (5, 1).

11. Dispositif de support selon l'une quelconque des revendications 1 à 10, **caractérisé en ce que** l'élément d'information (18) est prévu sur le corps verrouillage-déblocage (5) et le contre-élément (23) est prévue sur le cadre (1).

12. Dispositif de support selon l'une quelconque des revendications 1 à 11, **caractérisé en ce que** l'au moins un élément de verrouillage (11) est relié de manière rigide au support glissant (2) respectif.
